# EUROPEAN PATENT APPLICATION

(11) **EP 3 050 793 A1**
(43) Date of publication of application: **03.08.2016**
(21) Application number: 14847782.1
(22) Date of filing: 18.09.2014
(51) Int. Cl.: B63H 21/21, F02D 45/00

(54) **ENGINE CONTROL DEVICE**

(30) Priority: 27.09.2013 JP 2013201866
(71) Applicant: Yanmar Co., Ltd., Osaka-shi, Osaka 530-8311 (JP)
(72) Inventor: NAKANISHI, Takao, Osaka-shi Osaka 530-8311 (JP); MIYAZAKI, Hiroaki, Osaka-shi Osaka 530-8311 (JP); TAKAHATA, Terumitsu, Osaka-shi Osaka 530-8311 (JP)
(74) Representative: Isarpatent
(86) International application number: PCT/JP2014/004794
(87) International publication number: WO 2015/045334

(57) **Abstract**

An engine control device includes an engine failure determination unit and a rotation rate control unit. The engine failure determination unit determines whether or not a predetermined failure condition is satisfied based on a result of detection performed by a sensor that detects the state of a marine vessel engine. If an engine rotation rate is higher than a limited rotation rate when the engine failure determination unit determines that the failure condition is satisfied, the rotation rate control unit decreases the engine rotation rate to the limited rotation rate and performs a limited-operation control for rejecting any rotation rate operation that indicates a higher engine rotation rate than the limited rotation rate.

## Description

### TECHNICAL FIELD

The present invention relates to an engine control device that provides a limited-operation control for limiting the engine rotation rate in a case of occurrence of a predetermined failure.

### BACKGROUND ART

As shown in Patent Document 1, an engine includes numerous component parts. These component parts are provided with various types of sensors. For example, a sensor for detecting the temperature of cooling water, a sensor for detecting the pressure of a fuel in a common rail, a sensor for detecting the pressure of an engine oil, and the like, are provided in the engine.

Results of detection by these sensors are outputted to a control device such as an ECU. Based on these results of detection, the control device determines whether or not the engine has any failure.

### PRIOR-ART DOCUMENTS

### PATENT DOCUMENTS

Patent Document 1: Japanese Patent Application Laid-Open No. 2011-17257

### SUMMARY OF THE INVENTION

### PROBLEMS TO BE SOLVED BY THE INVENTION

In a case where the determination made in the above-mentioned manner results in the engine having a failure, a limited-operation control may be performed. The limited-operation control means a control in which a rotation rate operation indicating a higher engine rotation rate than a predefined engine rotation rate (limited rotation rate) is rejected. Performing the limited-operation control enables a less influence to be given from the engine failure.

Conventionally, if the control device determines that the engine has a failure, the rotation rate of the engine is once decreased to a low idling rotation rate (a rotation rate lower than the limited rotation rate) and then the control is shifted to the limited-operation control.

This, however, requires that, if the engine rotation rate is high at the time of occurrence of a failure, the engine rotation rate be once decreased to the low idling rotation rate and then increased to the vicinity of the limited rotation rate in order that the limited-operation control can be performed.

Particularly in marine vessels, which do not move by inertia because of the presence of water resistance, the vessel speed decreases directly after the engine rotation rate is decreased. As a result, the voyage is delayed even if the limited-operation control is cancelled soon.

Additionally, changing the engine rotation rate in the above-described manner causes the marine vessel to suddenly decrease its speed and then increase it again. This gives discomfort to passengers.

Conventionally, moreover, a command indicating any engine rotation rate cannot be accepted until an operation unit that issues a command indicating an engine rotation rate is once reset to the low idling rotation rate. Therefore, for example, even while the operation is performed at a rate lower than the limited rotation rate, an unnecessary operation, that is, once issuing a command indicating the low idling rotation rate and then returning to the original rate, is needed.

The present invention has been made in view of the circumstances described above, and a primary object of the present invention is to provide an engine control device capable of a limited-operation control, the engine control device configured to prevent a rapid change in the vessel speed during the shift to the limited-operation control.

### MEANS FOR SOLVING THE PROBLEMS AND EFFECTS THEREOF

Problems to be solved by the present invention are as described above, and next, means for solving the problems and effects thereof will be described.

In an aspect of the present invention, an engine control device having the following configuration is provided. The engine control device includes an engine failure determination unit and a rotation rate control unit. The engine failure determination unit determines whether or not a predetermined failure condition is satisfied based on a result of detection performed by a sensor that detects the state of a marine vessel engine. If an engine rotation rate is higher than a limited rotation rate when the engine failure determination unit determines that the failure condition is satisfied, the rotation rate control unit decreases the engine rotation rate to the limited rotation rate and performs a limited-operation control for rejecting any rotation rate operation that indicates a higher engine rotation rate than the limited rotation rate.

This enables the vessel maneuver to be continued without the need to decrease the engine rotation rate to the low idling rotation rate although it has been conventionally needed. Accordingly, smooth shifting to the limited-operation control can be achieved, and also a reduced influence of voyage delay is caused. In addition, occurrence of rapid deceleration and acceleration can be prevented, and thus giving discomfort to passengers can be prevented.

In the engine control device, it is preferable that, if the engine rotation rate is not higher than the limited rotation rate when the engine failure determination unit determines that the failure condition is satisfied, the rotation rate control unit effects shifting to the limited-operation control without changing the engine rotation rate.

The engine rotation rate is not decreased to the low idling rotation rate. Accordingly, in a case where the engine rotation rate is low for the first place, smooth shifting to the limited-operation control can be achieved with the vessel maneuver state maintained.

In the engine control device, it is preferable that, when the rotation rate control unit effects the limited-operation control, the effectuation is announced.

This enables a vessel maneuverer to recognize that the control has shifted to the limited-operation control. Particularly in the present invention, shifting to the limited-operation control is less noticeable because the engine rotation rate is not decreased to the low idling rotation rate. Therefore, the effect of the announcing can be further advantageous.

In the engine control device, it is preferable that, if the engine rotation rate is higher than the limited rotation rate when the engine failure determination unit determines that the failure condition is satisfied, the rotation rate control unit decreases the engine rotation rate to the limited rotation rate and then maintains the limited rotation rate, the rotation rate control unit continuously maintaining the limited rotation rate until a rotation rate operation that indicates a rate not higher than the limited rotation rate is performed.

This can achieve an engine rotation rate closest to what the vessel maneuverer intends, in a case where a rotation rate operation indicating a higher rate than the limited rotation rate is performed after the control is shifted to the limited-operation control.

### BRIEF DESCRIPTION OF THE DRAWINGS

[Fig. 1] An outline diagram showing a side view of a marine vessel and a propulsion mechanism thereof.
[Fig. 2] A block diagram showing devices arranged in the marine vessel.
[Fig. 3] A block diagram showing a sensor/actuator group.
[Fig. 4] A flowchart showing a process concerning a limited-operation control.
[Fig. 5] A diagram showing an exemplary timing chart for the limited-operation control.
[Fig. 6] A diagram showing another exemplary timing chart for the limited-operation control.

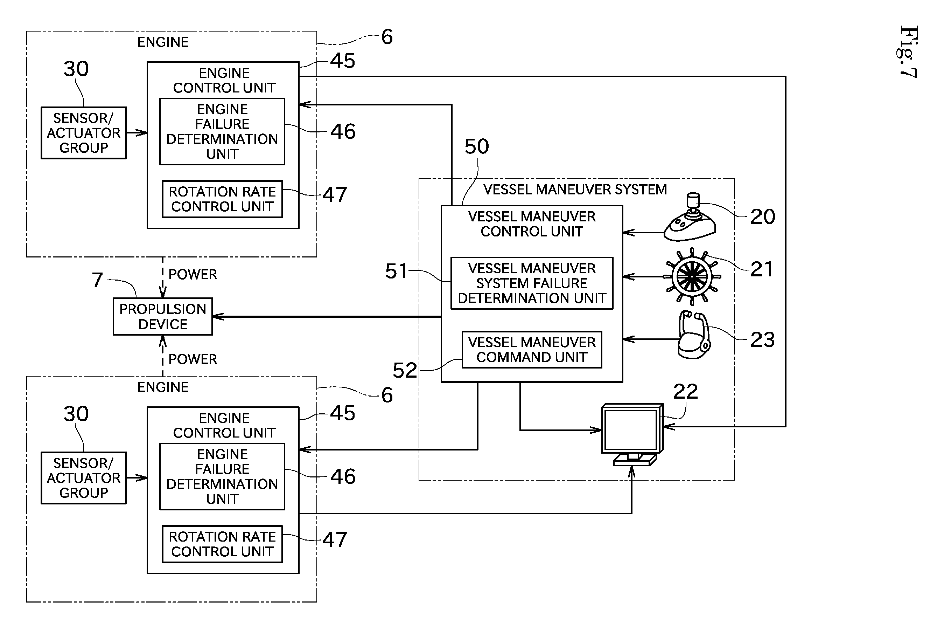

[Fig. 7] A block diagram showing a variation in which two marine vessel engines are mounted.

### EMBODIMENT FOR CARRYING OUT THE INVENTION

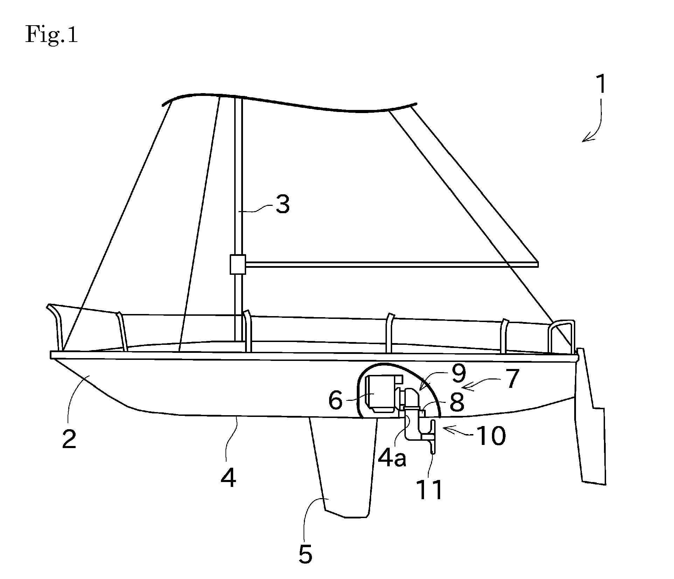

Next, an embodiment of the present invention will be described with reference to the drawings. To start with, referring to Fig. 1, a marine vessel and a propulsion mechanism will be described. Fig. 1 is an outline diagram showing a side view of a marine vessel and a propulsion mechanism.

As shown in Fig. 1, the marine vessel 1 is a sailing vessel equipped with a vertical sail. The marine vessel 1 includes a vessel hull 2, a mast 3, a vessel bottom 4, a centerboard 5, and a propulsion device 7.

The mast 3 is provided so as to stand on the vessel hull 2, and a sail is attached to the mast 3. The centerboard 5 is attached to the vessel bottom 4.

The marine vessel 1 is equipped with inboard engine/outboard drive. To be specific, a marine vessel engine 6 is arranged inside the vessel hull 2. The marine vessel engine 6 is a diesel engine including a fuel injector of common rail type. A propulsion device 7 is coupled to the rear end of the marine vessel engine 6.

The propulsion device 7 is secured to a mount base 8 that is provided on the vessel bottom 4. The propulsion device 7 includes an upper unit 9 and a lower unit 10.

The upper unit 9, which is arranged inside the vessel hull 2, is coupled to the marine vessel engine 6. The lower unit 10, which includes a propeller 11 and a rudder (not shown), is arranged with the propeller 11 and the rudder located outside in water via an opening 4a of the vessel bottom 4.

In this configuration, power generated by the marine vessel engine 6 is used to drive the propeller 11, so that the marine vessel 1 moves.

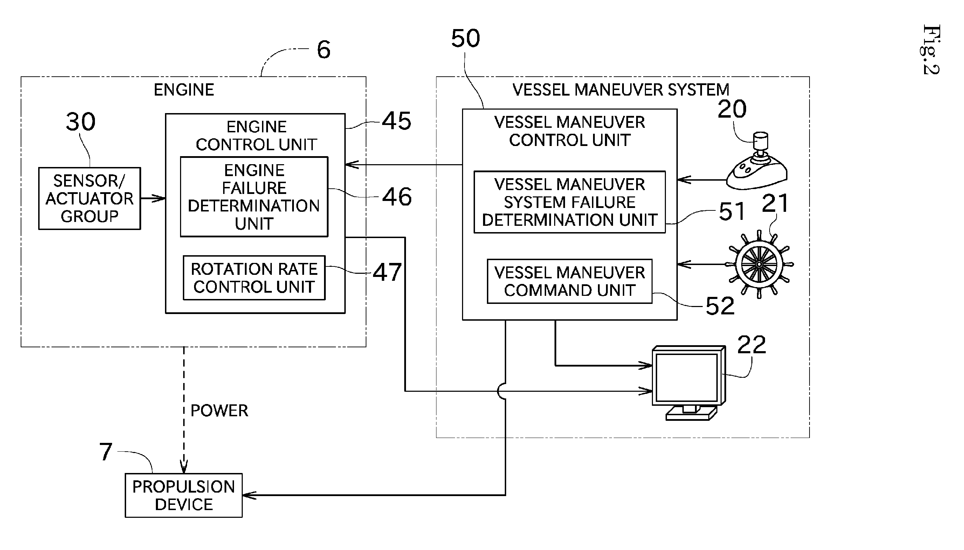

Next, referring to Fig. 2, a vessel maneuvering system and the marine vessel engine 6 will be described. The vessel maneuvering system and the marine vessel engine 6 will be collectively referred to as a marine vessel propulsion control system. Fig. 2 is a block diagram showing devices arranged in the marine vessel.

The vessel maneuvering system will be firstly described. A joystick lever 20, a steering wheel 21, and a display device 22 are provided at a cockpit of the marine vessel 1.

The joystick lever 20 is configured to be operable forward and backward. An operation performed on the joystick lever 20 is transmitted to a vessel maneuver control unit 50. The vessel maneuver control unit 50 (more specifically, a vessel maneuver command unit 52) gives a command corresponding to the operation to the marine vessel engine 6 or the propulsion device 7.

Operating the joystick lever 20 in forward direction causes the vessel maneuver control unit 50 to command the propulsion device 7 such that the propeller 11 rotates in the direction that makes the marine vessel 1 move forward. Operating the joystick lever 20 in backward direction causes the vessel maneuver control unit 50 to command the propulsion device 7 such that the propeller 11 rotates in the direction that makes the marine vessel 1 move backward. Turning the joystick lever 20 causes the vessel maneuver control unit 50 to command the propulsion device 7 such that the marine vessel 1 turns around.

Upon a forward operation, backward operation, or turning operation of the joystick lever 20, the vessel maneuver control unit 50 transmits a signal corresponding to the amount of operation (the tilt angle and turn angle) of the joystick lever 20 to an engine control unit 45 of the marine vessel engine 6. The engine control unit 45 adjusts the amount of fuel to be injected from an injector in accordance with the signal that the vessel maneuver control unit 50 has transmitted based on the tilt angle. This is how a vessel maneuverer performs an operation (rotation rate operation) for changing the engine rotation rate (the rotation rate per unit time, or the rotation speed).

Instead of the joystick lever 20, the steering wheel 21 can be used to control the direction of movement of the marine vessel 1. If the vessel maneuverer rotates the steering wheel 21 to the left or right, the vessel maneuver control unit 50 transmits a signal corresponding to the direction and amount of rotation of the steering wheel 21 to the propulsion device 7. The propulsion device 7 changes the angle of the rudder based on this signal. This is how the vessel maneuverer is able to change the direction of movement of the marine vessel 1.

The display device 22 is configured to display, for example, the vessel speed, the engine rotation rate, and the travel distance of the marine vessel 1 based on the signal received from the engine control unit 45, the vessel maneuver control unit 50, or the like. In a case where a GPS device, etc., is provided, the display device 22 may be able to display the position of the vessel on a marine chart.

The vessel maneuver control unit 50 includes a vessel maneuver system failure determination unit 51. The vessel maneuver system failure determination unit 51 determines whether or not a failure is occurring in a hydraulic system that changes the rudder angle, whether or not a failure (malfunction) such as an unexpected operation performed on the joystick lever 20 is occurring in the vessel maneuvering system, and the like. If the vessel maneuver system failure determination unit 51 determines that a failure (malfunction) is occurring, the display device 22 displays it.

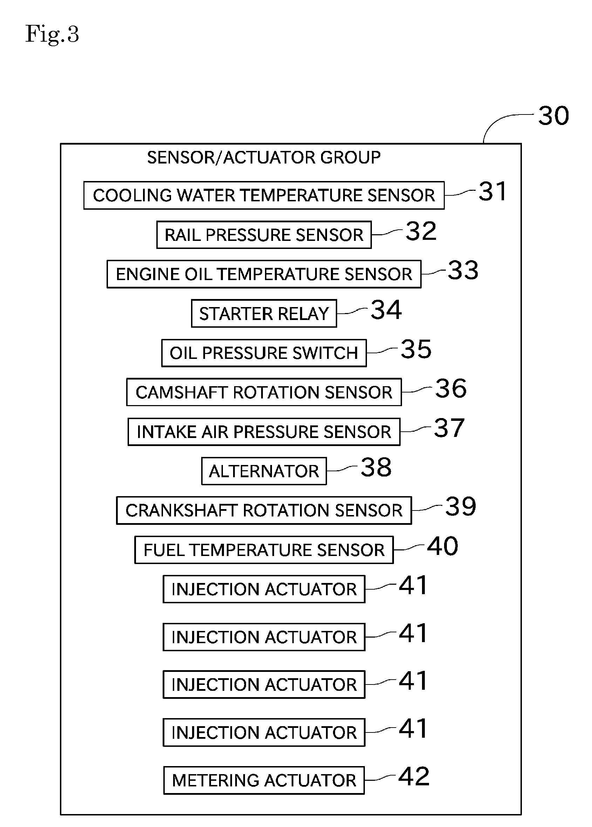

Next, the marine vessel engine 6 will be described. The marine vessel engine 6 is provided with various sensors and actuators (which will be collectively referred to as "sensor/actuator group 30"). The sensor/actuator group 30 is connected to the engine control unit 45. The engine control unit 45 issues an alert or adjusts the actuators based on information received from the sensors. In the following, the sensor/actuator group 30 will be detailed with reference to the block diagram of Fig. 3.

A cooling water temperature sensor 31 of the sensor/actuator group 30 is a sensor that detects the temperature of cooling water. The cooling water temperature sensor 31 is arranged within a cooling water tank or a cooling water pipe. The marine vessel engine 6 includes a fresh water cooler that cools the cooling water by using water (e.g., sea water) taken from the outside of the vessel. The cooling water having a high temperature indicates the possibility of overheating of the marine vessel engine 6 or the possibility of occurrence of a failure in the fresh water cooler.

A rail pressure sensor 32 of the sensor/actuator group 30 is a sensor that detects the pressure of a fuel in a common rail. The rail pressure sensor 32 is arranged within the common rail. The common rail having a high pressure indicates the possibility of occurrence of a malfunction in pressure control, which may hinder proper injection of the fuel.

An engine oil temperature sensor 33 of the sensor/actuator group 30 is a sensor that detects the temperature of an engine oil. The engine oil temperature sensor 33 is arranged in an oil pan, a drain bolt, or the like. The engine oil having a high temperature prevents its lubricating function to be properly exerted.

A starter relay 34 of the sensor/actuator group 30 drives a starter motor (not shown) to start the marine vessel engine 6. An oil pressure switch 35 of the sensor/actuator group 30 detects the pressure of a hydraulic oil supplied to the hydraulic system. The hydraulic oil having an inappropriate pressure indicates the possibility that the hydraulic system fails to function normally.

A camshaft rotation sensor 36 of the sensor/actuator group 30 detects the rotation rate of the camshaft. When the camshaft has an inappropriate rotation rate, there is the possibility that a power transmission mechanism fails to function normally. An intake air pressure sensor 37 of the sensor/actuator group 30 detects the pressure of intake air. The intake air having an inappropriate pressure indicates the possibility that devices of an intake air system fail to function normally.

An alternator 38 of the sensor/actuator group 30 utilizes the power of the engine to generate electricity. For example, when the amount of electricity generated by the alternator 38 does not rise, it indicates the possibility that the alternator 38 fails to function normally. A crankshaft rotation sensor 39 of the sensor/actuator group 30 detects the rotation rate of a crankshaft. The crankshaft having an inappropriate rotation rate indicates the possibility that the power transmission mechanism fails to function normally.

A fuel temperature sensor 40 of the sensor/actuator group 30 detects the temperature of a fuel. The fuel having an excessively high temperature indicates the possibility of occurrence of deterioration of a sealing member or the like.

Four injection actuators 41 of the sensor/actuator group 30 cause the fuel to be injected from respective injectors in accordance with a command from the engine control unit 45. The amount of fuel to be injected and the timing of injection can be adjusted by controlling the injection actuators 41. A metering actuator 42 of the sensor/actuator group 30 is able to adjust the amount of fuel to be supplied to the common rail in accordance with a command from the engine control unit 45.

The engine control unit 45 includes an engine failure determination unit 46 and a rotation rate control unit 47.

The engine failure determination unit 46 determines whether or not a predetermined failure condition is satisfied based on results of detection performed by the cooling water temperature sensor 31, the rail pressure sensor 32, the engine oil temperature sensor 33, the oil pressure switch 35, the camshaft rotation sensor 36, the intake air pressure sensor 37, the alternator 38, the crankshaft rotation sensor 39, and the fuel temperature sensor 40 mentioned above. The failure condition is a preset condition, and for example, it is a condition that: (1) a detected value detected by each of the above-mentioned sensors be equal to or more than a threshold value that has been set for each sensor; or (2) a detected value detected by each of the above-mentioned sensors be continuously kept equal to or more than the threshold value for at least a predetermined time period. For some of the sensors, the failure condition may be that the detected value be "equal to or less than the threshold value" instead of "equal to or more than the threshold value".

The rotation rate control unit 47 controls the engine rotation rate. For example, if the engine failure determination unit 46 determines that the failure condition is satisfied, the rotation rate control unit 47 adjusts the injection actuators 41 and the metering actuator 42 to perform a limited-operation control so as to prevent the engine rotation rate from exceeding a limited rotation rate.

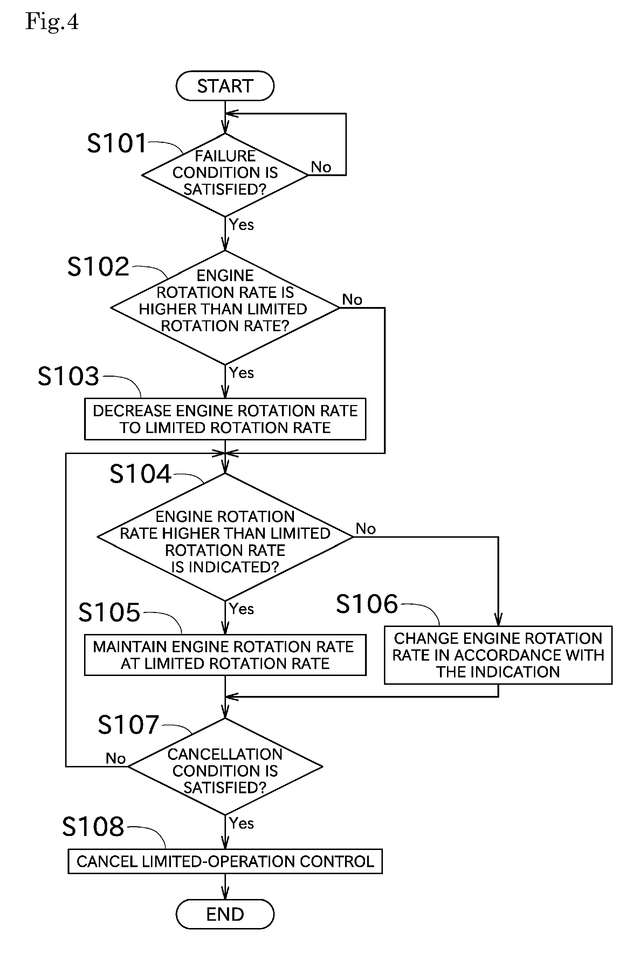

Next, the limited-operation control will be described with reference to Figs. 4 to 6. Firstly, referring to Fig. 4, a control performed by the engine control unit 45 will be described. Fig. 4 is a flowchart showing a process concerning the limited-operation control.

As described above, the engine control unit 45 determines whether or not the failure condition is satisfied based on the results of detection by the sensors (S101). Upon determining that the failure condition is satisfied, the engine control unit 45 issues an alert by displaying the result of determination on the display device 22, and also determines whether or not the engine rotation rate is higher than the limited rotation rate (S102).

If the engine rotation rate is higher than the limited rotation rate, the engine control unit 45 performs a control of decreasing the engine rotation rate to the limited rotation rate (S103). Conventionally, the engine rotation rate is decreased to the low idling rotation rate which is lower than the limited rotation rate upon determination that the failure condition is satisfied. The low idling rotation rate means an engine rotation rate exerted when the engine is idling.

After decreasing the engine rotation rate to the limited rotation rate, the engine control unit 45 determines whether or not any engine rotation rate higher than the limited rotation rate is indicated by the vessel maneuverer (S104). If any engine rotation rate higher than the limited rotation rate is indicated, the engine control unit 45 keeps the engine rotation rate maintained at the limited rotation rate (S105).

If any engine rotation rate not higher than the limited rotation rate is indicated, the engine control unit 45 performs a control of setting the engine rotation rate to the indicated rate (S106). The control performed in S104 to S106 enables the engine rotation rate to be kept not more than the limited rotation rate (limited-operation control).

If the engine rotation rate is not higher than the limited rotation rate when the failure condition is satisfied (S102: No), the engine control unit 45 shifts the control to the limited-operation control without changing the engine rotation rate.

During the limited-operation control, the engine control unit 45 determines whether or not a cancellation condition is satisfied (S107). The cancellation condition is a condition based on which the limited-operation control is cancelled. The cancellation condition is a preset condition that is set with respect to each of the sensors, and for example, it is a condition that "a detected value detected by each of the above-mentioned sensors be equal to or less than a threshold value". The threshold value may be the same threshold value as that for the failure condition, or alternatively a threshold value different from that for the failure condition may be adopted in order to avoid a situation where shifting to the limited-operation control and cancelling it are repeated.

Upon determining that the cancellation condition is satisfied, the engine control unit 45 cancels the limited-operation control and returns to the normal control (S108).

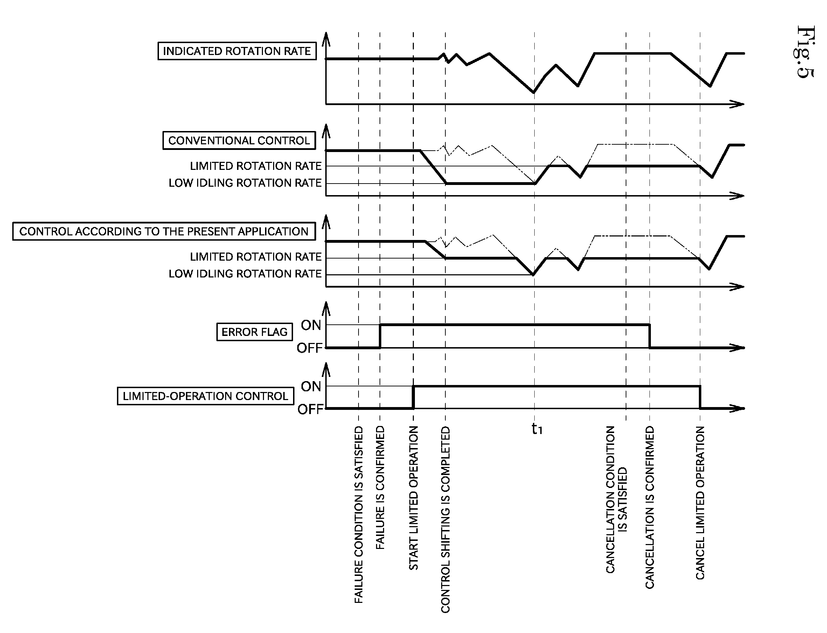

Next, a specific description will be given about a change in the engine rotation rate under the limited-operation control. Firstly, a case where the engine rotation rate is higher than the limited rotation rate when the failure condition is satisfied will be described with reference to Fig. 5. Fig. 5 is a diagram showing an exemplary timing chart for the limited-operation control.

In Fig. 5, the horizontal axis represents time axis, and a plurality of graphs are arranged vertically. The uppermost graph shows the engine rotation rate (indicated rotation rate) that the vessel maneuverer has indicated with the joystick lever 20. The second uppermost graph shows a change in the engine rotation rate under the conventional control, and the third uppermost graph shows a change in the engine rotation rate under the control according to the present application.

As shown in Fig. 5, upon the determine that the failure condition is satisfied, a failure is confirmed so that an error flag is turned ON (an alert is displayed on the display device 22). Then, after elapse of about several seconds, the limited-operation control is started. The purpose of waiting for elapse of the about several seconds is to give time for the vessel maneuverer to be mentally prepared, because a sudden change in the engine rotation rate might upset the vessel maneuverer.

Conventionally, the engine rotation rate is decreased to the low idling rotation rate after the limited operation is started. Thereafter, any operation performed by the vessel maneuverer is not accepted even if the indicated rotation rate is not higher than the limited rotation rate. It is accepted only after the indicated rotation rate has dropped to the low idling rotation rate (at and after the time t1). Therefore, the vessel speed suddenly decreases.

In this embodiment, on the other hand, the engine rotation rate is decreased to the limited rotation rate, as described above with the flowchart. Then, the marine vessel engine 6 is driven at the limited rotation rate if the indicated rotation rate is higher than the limited rotation rate, while the marine vessel engine 6 is driven at the indicated rotation rate if the indicated rotation rate is not higher than the limited rotation rate.

Thus, this embodiment, in which the engine rotation rate is not decreased to the low idling rotation rate at first, can prevent the vessel speed from changing rapidly. Additionally, there is no need to once indicate the low idling rotation rate. This enables smooth shifting to the limited-operation control.

If the cancellation condition is satisfied, the error flag is turned OFF (the alert is no longer displayed on the display device 22), and then the limited-operation control is cancelled.

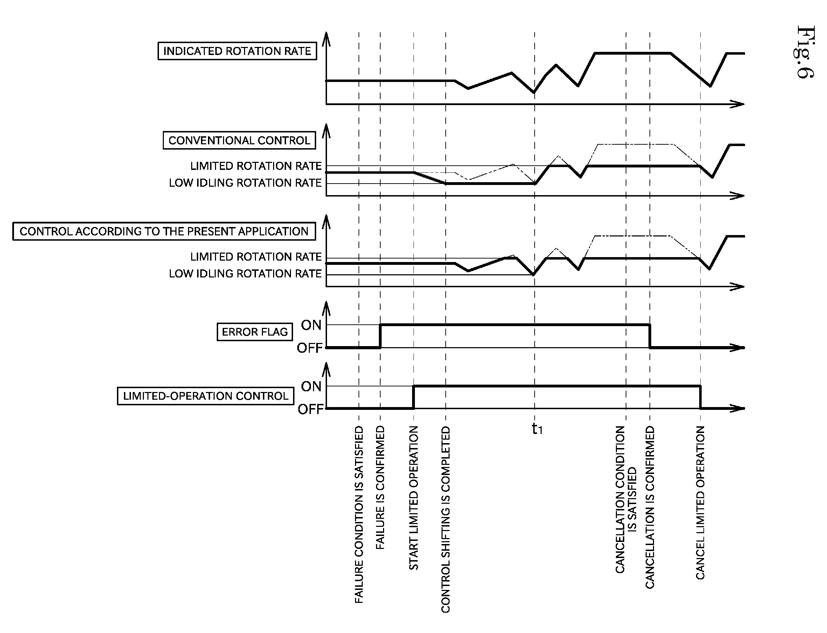

Next, a case where the engine rotation rate is not higher than the limited rotation rate when the failure occurs will be described with reference to Fig. 6.

Conventionally , the engine rotation rate is decreased to the low idling rotation rate in this case as well. Thereafter, any operation performed by the vessel maneuverer is not accepted even if the indicated rotation rate is not higher than the limited rotation rate. It is accepted only after the indicated rotation rate has dropped to the low idling rotation rate (at and after the time t1).

In this embodiment, on the other hand, the control of changing the engine rotation rate is not performed at a time of shifting to the limited-operation control. This enables shifting to the limited-operation control to be especially smooth while maintaining the state of vessel maneuver. In this embodiment, the display device 22 announces the shifting to the limited operation, which enables the vessel maneuverer to recognize that the control has shifted to the limited-operation control, even in a case where the engine rotation rate does not change automatically.

Next, a variation of the above-described embodiment will be described. In the description of this variation, members identical or similar to those of the above-described embodiment are given the same reference signs on the drawing, and descriptions thereof may be omitted.

Although the above-described embodiment illustrates a configuration having a single marine vessel engine 6 mounted, any number of the marine vessel engines 6 may be mounted. This variation illustrates a configuration having two marine vessel engines 6 mounted.

In a case of two marine vessel engines 6 mounted, an acceleration lever (operation unit) 23 is additionally provided at the cockpit of the marine vessel 1. The acceleration lever 23 includes two levers. One of the levers is configured to control the rotation rate of one of the marine vessel engines 6 in accordance with the amount of operation of the lever, and the other lever is configured to control the rotation rate of the other marine vessel engine 6 in accordance with the amount of operation of the lever.

In a case where two marine vessel engines 6 are mounted as illustrated in this variation, the sensor/actuator group 30 is provided to each of the marine vessel engines 6. The engine failure determination unit 46 provided in each of the marine vessel engines 6 performs the determination of the failure condition. That is, a situation may occur in which one marine vessel engine 6 performs the limited-operation control while the other marine vessel engine 6 performs the normal control.

As thus described above, the engine control unit 45 includes the engine failure determination unit 46 and the rotation rate control unit 47. The engine failure determination unit 46 determines whether or not the predetermined failure condition is satisfied based on results of detection performed by the sensors configured to detect the state of the marine vessel engine 6. If the engine rotation rate is higher than the limited rotation rate when the engine failure determination unit 46 determines that the failure condition is satisfied, the rotation rate control unit 47 decreases the engine rotation rate to the limited rotation rate and performs the limited-operation control for rejecting any rotation rate operation that indicates a higher rotation rate than the limited rotation rate.

This enables the vessel maneuver to be continued without the need to decrease the engine rotation rate to the low idling rotation rate although it has been conventionally needed. Accordingly, smooth shifting to the limited-operation control can be achieved, and also a reduced influence of voyage delay is caused. In addition, occurrence of rapid deceleration and acceleration can be prevented, and thus giving discomfort to passengers can be prevented.

In the above-described engine control unit 45, if the engine rotation rate is not higher than the limited rotation rate when the engine failure determination unit 46 determines that the failure condition is satisfied, the rotation rate control unit 47 effects shifting to the limited-operation control without changing the engine rotation rate.

The engine rotation rate is not decreased to the low idling rotation rate. Accordingly, in a case where the engine rotation rate is low for the first place, smooth shifting to the limited-operation control can be achieved with the vessel maneuver state maintained.

Although a preferred embodiment of the present invention and a variation thereof have been described above, the above-described configuration can be modified, for example, as follows.

The marine vessel engine 6 is also applicable to a propulsion mechanism different from the sail-drive type as illustrated above. For example, a stern-drive type is also acceptable in which a power transmission device having a propeller directly attached thereto is arranged on the rear side of a vessel hull so that power of the marine vessel engine is transmitted from a power transmission shaft provided on the rear side of the marine vessel engine to the power transmission device. Moreover, a marine gear of angle type in which a propeller shaft is mounted obliquely below and on the rear side of a power transmission device, and a marine gear of parallel type in which a propeller shaft is horizontally mounted on the rear side of a power transmission device, may be also acceptable. The marine vessel may be not only a sailing vessel but also a steam vessel.

It may be conceivable that the engine control unit 45 and the vessel maneuver control unit 50 are configured as a single control device. In such a case, a failure determination unit included in this control device corresponds to the "engine failure determination unit". In addition, the two marine vessel engines 6 of the variation may be controlled by a single engine control unit 45.

The sensors described above are merely illustrative ones. Addition of any sensor or modification of the sensors may be acceptable as appropriate, as long as the sensors are able to detect a failure of the marine vessel engine 6.

The above-described operation unit is merely illustrative one. It may be changed as appropriate, as long as it is able to perform the rotation rate operation for changing the engine rotation rate.

The above-described embodiment illustrates the case where the shifting to the limited-operation control is announced via displaying on the display device 22, but instead, the shifting to the limited-operation control may be announced via sound, light, or the like.

### DESCRIPTION OF THE REFERENCE NUMERALS

- 1: marine vessel
- 6: marine vessel engine
- 11: propeller
- 20: joystick lever
- 21: steering wheel
- 22: display device
- 23: acceleration lever
- 45: engine control unit (engine control device)
- 46: engine failure determination unit
- 47: rotation rate control unit

## Claims

1. An engine control device comprising:
an engine failure determination unit that determines whether or not a predetermined failure condition is satisfied based on a result of detection performed by a sensor that detects the state of a marine vessel engine; and
a rotation rate control unit that, if an engine rotation rate is higher than a limited rotation rate when the engine failure determination unit determines that the failure condition is satisfied, decreases the engine rotation rate to the limited rotation rate and performs a limited-operation control for rejecting any rotation rate operation that indicates a higher engine rotation rate than the limited rotation rate.

2. The engine control device according to claim 1, wherein
if the engine rotation rate is not higher than the limited rotation rate when the engine failure determination unit determines that the failure condition is satisfied, the rotation rate control unit effects shifting to the limited-operation control without changing the engine rotation rate.

3. The engine control device according to claim 1, wherein
when the rotation rate control unit effects the limited-operation control, the effectuation is announced.

4. The engine control device according to claim 1, wherein
if the engine rotation rate is higher than the limited rotation rate when the engine failure determination unit determines that the failure condition is satisfied, the rotation rate control unit decreases the engine rotation rate to the limited rotation rate and then maintains the limited rotation rate, the rotation rate control unit continuously maintaining the limited rotation rate until a rotation rate operation that indicates a rate not higher than the limited rotation rate is performed.
